(19) Europäisches Patentamt
European Patent Office
Office européen des brevets

(11) **EP 1 706 460 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(21) Anmeldenummer: **04804413.5**

(22) Anmeldetag: **30.12.2004**

(51) Int Cl.:
**C09B 67/20** (2006.01)    **C04B 24/26** (2006.01)

(86) Internationale Anmeldenummer:
**PCT/EP2004/014828**

(87) Internationale Veröffentlichungsnummer:
**WO 2005/068561 (28.07.2005 Gazette 2005/30)**

(54) **WÄSSRIGE BESCHICHTUNGSMASSEN MIT HOHER PIGMENTVOLUMENKONZENTRATION**

AQUEOUS COATING SUBSTANCES COMPRISING INCREASED VOLUMETRIC CONCENTRATIONS OF PIGMENT

MATIERES DE REVETEMENT AQUEUSES A CONCENTRATION PIGMENTAIRE VOLUMIQUE ELEVEE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **13.01.2004 DE 102004001990**

(43) Veröffentlichungstag der Anmeldung:
**04.10.2006 Patentblatt 2006/40**

(73) Patentinhaber: **BASF SE**
**67056 Ludwigshafen (DE)**

(72) Erfinder:
• **DERSCH, Rolf**
  **67434 Neustadt (DE)**
• **GOTSCHE, Michael**
  **68259 Mannheim (DE)**

(56) Entgegenhaltungen:
EP-A- 0 498 195    EP-A- 0 542 033
EP-A- 1 046 682    WO-A- 94/15706
DE-A1- 3 803 810    US-A- 3 262 898

Bemerkungen:
Die Akte enthält technische Angaben, die nach dem Eingang der Anmeldung eingereicht wurden und die nicht in dieser Patentschrift enthalten sind.

**Beschreibung**

Vorliegende Erfindung betrifft eine wässrige Beschichtungsmasse mit einer Pigmentvolumenkonzentration ≥ 60 %, enthaltend wenigstens ein feinteiliges Pigment, wenigstens einen feinteiligen Füllstoff, wenigstens ein polymeres Bindemittel und wenigstens ein Pigmentdispergiermittel PD sowie gegebenenfalls weitere übliche Hilfsstoffe, welche dadurch gekennzeichnet ist, dass das wenigstens eine Pigmentdispergiermittel PD ein partiell verestertes Copolymerisat ist, das erhältlich ist durch Copolymerisation von

a) wenigstens einem $C_4$- bis $C_{40}$-Olefin als Komponente A mit

b) wenigstens einem ethylenisch ungesättigten Dicarbonsäureanhydrid mit 4 bis 8 C-Atomen als Komponente B

im Molverhältnis A : B von 1 : 0,5 bis 2 zu einem Copolymerisat mit einem K-Wert von 6 bis 100 (bestimmt nach H. Fikentscher in Tetrahydrofuran bei 25 °C und einer Copolymerisatkonzentration von 1 Gew.-%) und anschließende partielle Veresterung des Copolymerisats mit einem Umsetzungsprodukt aus

x) $C_1$- bis $C_{30}$-Alkoholen, $C_8$- bis $C_{22}$-Fettsäuren, $C_1$- bis $C_{12}$-Alkylphenolen, sekundären $C_2$- bis $C_{30}$-Aminen oder deren Mischungen als Komponente X und

y) wenigstens einem $C_2$- bis $C_4$-Alkylenoxid als Komponente Y

im Molverhältnis X : Y von 1 : 2 bis 200, und Hydrolyse der Anhydridgruppen zu Carboxylgruppen, wobei die partielle Veresterung des Copolymerisats so weit geführt wird, dass 1 bis 50 % der Carboxylgruppen des Copolymerisats verestert sind.

Weiterhin betrifft die Erfindung ein Verfahren zur Herstellung einer Beschichtungsmasse mit einer Pigmentvolumenkonzentration ≥ 60 % durch Mischen einer Pigmentpaste, welche wenigstens ein Pigmentdispergiermittel PD enthält, mit einem polymeren Bindemittel sowie die Verwendung einer solchen Pigmentpaste zur Herstellung einer wässrigen Beschichtungsmasse.

Für die vorliegende Erfindung ist von folgendem Stand der Technik auszugehen.

Die EP-A 542033 offenbart Pigmentzubereitungen, welche neben einem Pigment ein Copolymerisat mit einer Molmasse von 500 bis 20000 g/mol enthalten, welches durch radikalische Polymerisation von $C_8$- bis $C_{40}$-Monoolefinen mit monoethylenisch ungesättigten $C_4$- bis $C_{12}$-Dicarbonsäuren oder Dicarbonsäureanhydriden erhalten wurde. Dabei können die Carboxyl- bzw. Anhydridgruppen des Copolymerisats ganz oder teilweise mit Ammoniak, Aminen, Alkoholen, Amino- oder Hydroxycarbonsäuren sowie Alkali- oder Erdalkalihydoxiden umgesetzt sein. Die Pigmentzubereitungen werden zur Herstellung von Pasten, Druckfarben, Lacken sowie neuen Pigmentzubereitungen verwendet.

In der DE-A 4300239 wird die Verwendung von partiell veresterten Copolymerisaten als Dispergiermittel für wässrige Pigmentsuspensionen beschrieben. Die partiell veresterten Copolymerisate sind durch Copolymerisation von wenigstens einem $C_4$- bis $C_{28}$-Olefin mit wenigstens einem ethylenisch ungesättigten Dicarbonsäureanhydrid mit 4 bis 8 C-Atomen im Molverhältnis 1 : 0,5 bis 2 zu einem Copolymerisat und anschließende partielle Veresterung des Copolymerisats mit einem Umsetzungsprodukt aus $C_1$- bis $C_{30}$-Alkoholen, $C_8$- bis $C_{22}$-Fettsäuren, $C_1$- bis $C_{12}$-Alkylphenolen, sekundären $C_2$- bis $C_{30}$-Aminen oder deren Mischungen und wenigstens einem $C_2$- bis $C_4$-Alkylenoxid im Molverhältnis 1 : 2 bis 200 und Hydrolyse der Anhydridgruppen zu Carboxylgruppen, wobei die partielle Veresterung des Copolymerisats so weit geführt wird, dass 1 bis 50 % der Carboxylgruppen des Copolymerisats verestert sind, zugänglich.

Die EP-A 498195 offenbart die Verwendung von Copolymerisaten, die durch radikalische Copolymerisation von 30 bis 50 mol-% $C_{13}$- bis $C_{40}$-Monoolefinen und/oder $C_{10}$- bis $C_{40}$-Alkylvinylethern mit 50 bis 70 mol-% ethylenisch ungesättigten $C_4$- bis $C_8$-Dicarbonsäureanhydriden erhältlich sind als Mittel zum Hydrophobieren von dispersionsgebundenen Dichtungsmassen, Putzen, Anstrichstoffen und Bauklebem.

Aufgabe vorliegender Erfindung bestand in der Bereitstellung wässriger Beschichtungsmassen, welche Vorteile, insbesondere eine verbesserte Nassscheuerfestigkeit, gegenüber den Beschichtungsmassen des Standes der Technik aufweisen.

Die Aufgabe wurde durch die Bereitstellung der eingangs definierten wässrigen Beschichtungsmasse gelöst.

Die erfindungsgemäße wässrige Beschichtungsmasse mit einer Pigmentvolumenkonzentration ≥ 60 %, enthält wenigstens ein feinteiliges Pigment, wenigstens einen feinteiligen Füllstoff, wenigstens ein polymeres Bindemittel und wenigstens ein Pigmentdispergiermittel PD sowie gegebenenfalls weitere übliche Hilfsstoffe.

Eine der wesentlichen Größen zur Charakterisierung von Beschichtungsmassen, insbesondere Anstrichmittel, ist die Pigmentvolumenkonzentration (PVK). Sie ist die rechnerische Beschreibung des Volumenanteils der feinteiligen Pigmente und feinteiligen Füllstoffe am Gesamtvolumen der getrockneten Beschichtungsmasse (Beschichtung). Die PVK wird wie in folgender Gleichung angegeben errechnet:

$$\% \text{ PVK} = \frac{\text{Volumen der Pigmente und Füllstoffe} \times 100}{\text{Volumen polymeres Bindemittel} + \text{Volumen der Pigmente und Füllstoffe}}$$

Je höher die PVK eingestellt ist, desto weniger polymeres Bindemittel enthält die Beschichtungsmasse. Häufig beträgt die PVK von Dispersionsfarben für den Innenbereich ≥70%,≥75% oder ≥80%.

Feinteilige Pigmente werden eingesetzt, um der aus der wässrigen Beschichtungsmasse erhältlichen Beschichtung ein gutes Deckvermögen und die gewünschte Farbe zu geben.

Als Pigmente werden feinteilige anorganische und organische Stoffe eingesetzt. Als feinteilig sollen im Rahmen dieser Schrift alle Pigmente mit einer mittleren Teilchengröße ≤ 1 μm und alle Füllstoffe ≤ 100 μm bei Dispersionsfarben sowie ≤ 10 mm bei Putzen oder Klebern (jeweils durch Siebung mit entsprechender Maschenweite bestimmt) angesehen werden.

Als wichtigstes Weißpigment ist aufgrund seines hohen Brechungsindex und seines guten Deckvermögens Titandioxid in Form seiner Anatas- und Rutil-Modifikationen zu nennen. Aber auch Zinkoxid und Zinksulfid werden als Weißpigmente eingesetzt. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten werden zur Farbgestaltung der Beschichtung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbazole eingesetzt.

Als feinteilige Füllstoffe werden im wesentlichen anorganische Materialien mit im Vergleich zu den Pigmenten geringerem Brechungsindex verwendet. Die feinteiligen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Kalziumcarbonat, kalziniertes Kaolin oder Bariumsulfat sowie pyrogene Kieselsäure. Bevorzugt wird als Füllstoff Kalziumcarbonat in Form des kristallinen Calcits oder der amorphen Kreide eingesetzt.

Als polymere Bindemittel werden insbesondere wässrige Polymerisatdispersionen eingesetzt. Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der gewichtsmittleren Durchmesser der Polymerisatpartikel liegt häufig im Bereich von 10 bis 1000 nm, oft 50 bis 500 nm oder 80 bis 300 nm. Der Polymerisatfeststoffgehalt der wässrigen Polymerisatdispersionen beträgt in der Regel 20 bis 70 Gew.-% oder 40 bis 60 Gew.-%.

Wässrige Polymerisatdispersionen sind insbesondere durch radikalisch initiierte wässrige Emulsionspolymerisation von ethylenisch ungesättigten Monomeren zugänglich. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise dergestalt, dass man die ethylenisch ungesättigten Monomeren, in der Regel unter Mitverwendung von Radikalkettenüberträgern und Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert.

Als polymere Bindemittel lassen sich insbesondere solche wässrigen Polymerisatdispersionen einsetzen, deren Polymerisatpartikel

| | |
|---|---|
| 50 bis 99,9 Gew.-% | Ester der Acryl- und/oder Methacrylsäure mit 1 bis 12 C-Atome aufweisenden Alkanolen und/oder Styrol, oder |
| 50 bis 99,9 Gew.-% | Styrol und/oder Butadien, oder |
| 50 bis 99,9 Gew.-% | Vinylchlorid und/oder Vinylidenchlorid, oder |
| 40 bis 99,9 Gew.-% | Vinylacetat, Vinylpropionat, Vinylester der Versaticsäure, Vinylester langkettiger Fettsäuren und/oder Ethylen |

in einpolymerisierter Form enthalten.

Insbesondere lassen sich als polymere Bindemittel solche wässrigen Polymerisatdispersionen einsetzen, deren Polymerisate zu

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
- 50 bis 99,9 Gew.-% wenigstens ein Ester der Acryl- und/oder Methacrylsäure mit 1 bis 12 C-Atome aufweisenden Alkanolen und/oder Styrol, oder
- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
- 50 bis 99,9 Gew.-% Styrol und/oder Butadien, oder
- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
- 50 bis 99,9 Gew.-% Vinylchlorid und/oder Vinylidenchlorid, oder
- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
- 40 bis 99,9 Gew.-% Vinylacetat, Vinylpropionat, Vinylester der Versaticsäure, Vinylester langkettiger Fettsäuren und/oder Ethylen

in einpolymerisierter Form enthalten.

Erfindungsgemäß werden bevorzugt solche polymeren Bindemittel eingesetzt, deren Glasübergangstemperatur -30 bis +60 °C, oft -10 bis +30 °C und häufig 0 bis +20 °C beträgt. Mit der Glasübergangstemperatur ($T_g$), ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß UII-mann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden zB. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Wesentlich ist, dass als polymere Bindemittel sowohl wässrige Polymerisatdispersionen als auch die daraus - mittels dem Fachmann geläufigen Trocknungsverfahren, beispielsweise Gefrier- oder Sprühtrocknung - zugänglichen Polymerisatpulver eingesetzt werden können.

Wesentlicher Bestandteil der wässrigen Beschichtungsmasse ist wenigstens ein Pigmentdispergiermittel PD, welches bereits prinzipiell in der EP-A 367049 offenbart wurde. Als Pigmentdispergiermittel PD zur Herstellung der erfindungsgemäßen wässrigen Beschichtungsmasse kommen grundsätzlich alle die in der EP-A 367049 beschriebenen und offenbarten, insbesondere die beispielhaft ausgeführten Copolymerisate in Betracht.

Als Pigmentdispergiermittel PD wird erfindungsgemäß ein partiell verestertes Copolymerisat eingesetzt, das durch Copolymerisation von

a) wenigstens einem $C_4$- bis $C_{40}$-Olefin als Komponente A mit
b) wenigstens einem ethylenisch ungesättigten Dicarbonsäureanhydrid mit 4 bis 8 C-Atomen als Komponente B

im Molverhältnis A : B von 1 : 0,5 bis 2 zu einem Copolymerisat mit einem K-Wert von 6 bis 100 (bestimmt nach H. Fikentscher in Tetrahydrofuran bei 25 °C und einer Copolymerisatkonzentration von 1 Gew.-%) und anschließende partielle Veresterung des Copolymerisats mit einem Umsetzungsprodukt aus

x) C$_1$- bis C$_{30}$-Alkoholen, C$_8$- bis C$_{22}$-Fettsäuren, C$_1$- bis C$_{12}$-Alkylphenolen, sekundären C$_2$- bis C$_{30}$-Aminen oder deren Mischungen als Komponente X und

y) wenigstens einem C$_2$- bis C$_4$-Alkylenoxid als Komponente Y

im Molverhältnis X : Y von 1 : 2 bis 200, und Hydrolyse der Anhydridgruppen zu Carboxylgruppen, wobei die partielle Veresterung des Copolymerisats so weit geführt wird, dass 1 bis 50 % der Carboxylgruppen des Copolymerisats verestert sind, erhältlich ist.

Als Komponente A kommen alle C$_4$- bis C$_{40}$-Olefine, insbesondere C$_4$- bis C$_{28}$Olefine oder C$_4$- bis C$_{12}$-Olefine in Betracht. Beispielhaft genannt seien Buten-1, Isobuten, Octen-1, 2,4,4-Trimethylpenten-1, Decen-1, Dodecen-1, Tetradecen-1, Hexadecen-1, Heptadecen-1, Octadecen-1 und Mischungen der genannten Olefine. Von den genannten Olefinen kommen nicht nur die Olefine mit endständiger Doppelbindung in Betracht, sondern auch deren isomeren Verbindungen mit mittelständischen Doppelbindungen. Neben den linearen Olefinen können auch deren verzweigte Isomere eingesetzt werden. Besonders bevorzugt ist die Verwendung von technischen Gemischen aus 2,4,4-Trimethylpenten-1 und 2,4,4-Trimethylpenten-2 ("Diisobuten") als Komponente A.

Als Komponente B eignen sich monoethylenisch ungesättigte Dicarbonsäureanhydride mit 4 bis 8 C-Atomen, beispielsweise Maleinsäureanhydrid, Itaconsäureanhydrid, Mesaconsäureanhydrid, Citraconsäureanhydrid und Methylenmalonsäureanhydrid. Von den genannten Anhydriden werden Maleinsäureanhydrid und Itaconsäureanhydrid bevorzugt eingesetzt, wobei Maleinsäureanhydrid in der Praxis von besonderer Bedeutung ist.

Bei der Copolymerisation der Monomeren A und B entstehen Copolymerisate, welche die Monomeren A und B im Verhältnis A : B von 1 : 0,5 bis 2, oft 1 : 0,8 bis 1,5 oder 1 : 0,8 bis 1,2 und häufig 1 : 1 in einpolymerisierter Form enthalten. Die K-Werte der Copolymerisate betragen 6 bis 100, vorzugsweise 8 bis 40 (jeweils gemessen nach H. Fikentscher bei 25 °C in Tetrahydrofuran und einer Polymerkonzentration von 1 Gew.-%). Die Copolymerisation der Komponenten A und B wird nach bekannten Verfahren durchgeführt, beispielsweise in polaren, gegenüber den Säureanhydriden inerten Lösemitteln, wie Aceton, Tetrahydrofuran oder Dioxan als Lösungspolymerisation, in Toluol, Xylol oder aliphatischen Kohlenwasserstoffen in Form einer Fällungspolymerisation oder auch durch Massepolymerisation der Komponenten A und B, wobei es von Vorteil ist, einen Überschuß an Komponente A als Verdünnungsmittel zu wählen. Die Polymerisation wird bei allen Verfahren mit Hilfe von Polymerisationsinitiatoren ausgelöst. Als Polymerisationsinitiatoren kommen dabei sämtliche bei der Polymerisationstemperatur in Radikale zerfallenden und eine Radikalreaktion auslösende Verbindungen in Betracht, wie beispielsweise die dem Fachmann geläufigen Peroxide, Hydroperoxide, Redoxinitiatoren und Azoverbindungen.

Die so erhältlichen Copolymerisate werden anschließend partiell verestert und hydrolysiert, so dass die nichtveresterten Anhydridgruppen in Carboxylgruppen umgewandelt werden. Es ist auch möglich, die Anhydridgruppen enthaltenden Copolymerisate zunächst zu hydrolysieren, so dass sämtliche Anhydridgruppen als Carboxylgruppen vorliegen und dann die Veresterung nach bekannten Methoden durchzuführen. Bevorzugt ist jedoch eine Arbeitsweise, bei der man zunächst die Anhydridgruppen des Copolymerisats partiell mit den Umsetzungsprodukten der Komponenten X und Y verestert.

Geeignete Verbindungen X sind lineare, verzweigte oder cyclische C$_1$- bis C$_{30}$-Alkohole, beispielsweise Methanol, Ethanol, n-Propanol, Isopropanol, n-Butanol, Isobutanol, tert.-Butanol, Pentanol, Cyclohexanol, n-Hexanol, n-Octanol, 2-Ethylhexanol, Decanol, Dodecanol, Talgfettalkohole und Stearylalkohol sowie deren isomeren Verbindungen. Besondere technische Bedeutung haben die nach dem Oxoverfahren hergestellten Alkohole, z.B. C$_{10}$-Alkohole, C$_{13}$-Alkohole und C$_{13}$/C$_{15}$-Alkohole. Bei diesen nach dem Oxoverfahren hergestellten Alkoholen und den nativen Alkoholen handelt es sich in der Regel um Mischungen mehrerer Alkohole.

Geeignete Verbindungen X sind außerdem C$_8$- bis C$_{22}$-Fettsäuren, beispielsweise Stearinsäure, Palmitinsäure, Kokosfettsäure, Talgfettsäure, Laurinsäure oder Behensäure. Als Komponente X kommen ferner C$_1$- bis C$_{12}$-Alkylphenole in Betracht, beispielsweise n-Decylphenol, n-Nonylphenol, Isononylphenol, n-Octylphenol, Isobutylphenol und Methylphenol. Als Komponente X können ebenfalls sekundäre C$_2$- bis C$_{30}$-Amine eingesetzt werden, beispielsweise Dimethylamin, Di-n-butylamin, Di-n-octylamin, Distearylamin oder andere sekundäre C$_8$- bis C$_{18}$-Fettamine. Als Verbindung X werden bevorzugt C$_1$- bis C$_{30}$-Alkohole oder sekundäre C$_2$- bis C$_{18}$-Amine eingesetzt. Selbstverständlich lassen sich auch Gemische vorgenannter Verbindungen einsetzen.

Als Komponente Y eignen sich C$_2$- bis C$_4$-Alkylenoxide, beispielsweise Ethylenoxid, Propylenoxid, n-Butylenoxid oder Isobutylenoxid. Selbstverständlich lassen sich auch Gemische vorgenannter Verbindungen einsetzen. Bevorzugt werden Ethylenoxid und/oder Propylenoxid eingesetzt. Ethylenoxid und Propylenoxid können entweder allein an die Komponente X angelagert werden oder in Form eines Mischgases unter Bildung von statistisch aufgebauten Ethylenoxid- und Propylenoxideinheiten enthaltenden Addukten. Es ist jedoch auch möglich, dass man an die Komponente X zuerst Ethylenoxid und danach Propylenoxid anlagert oder die Reihenfolge umkehrt. Auch ist es beispielsweise möglich zunächst Ethylenoxid, dann Propylenoxid und danach wiederum Ethylenoxid an die Komponente X anzulagern, so dass Blockcopolymerisate entstehen. Verfahren zur Umsetzung von Komponente X mit C$_2$- bis C$_4$-Alkylenoxiden (Alkoxylierung) sind dem Fachmann geläufig.

Die Verbindungen X werden mit den Verbindungen Y in einem Molverhältnis X : Y von 1 : 2 bis 200, oft 1 : 3 bis 100 umgesetzt. Bei dieser Reaktion entstehen in allen Fällen Umsetzungsprodukte, bei denen mindestens eine Endgruppe eine OH-Gruppe ist. Die so hergestellten Umsetzungsprodukte aus X und Y werden mit den oben beschriebenen, aus den Komponenten A und B durch radikalische Copolymerisation erhaltenen Copolymerisate zur Reaktion gebracht, wobei partiell veresterte Copolymerisate entstehen. Diese Umsetzung kann in Gegenwart von gegenüber Carbonsäureanhydridgruppen interten organischen Lösungsmitteln durchgeführt werden. Oft erfolgt die Umsetzung in Masse, d.h. die Olefin/Dicarbonsäureanhydridgruppen enthaltenden Copolymerisate werden direkt mit den Umsetzungsprodukten der Verbindungen X und Y zur Reaktion gebracht. Dabei werden die Mengen so gewählt, dass nur eine partielle Veresterung der Anhydridgruppen eintritt. Bezogen auf das hydrolysierte partiell veresterte Polymerisat sind 1 bis 50 %, vorzugsweise 5 bis 30 % der Carboxylgruppen verestert. Die Veresterung selbst wird in aller Regel bei höheren Temperaturen, beispielsweise 50 bis 200 °C, vorzugsweise 80 bis 150 °C in Gegenwart üblicher Veresterungskatalysatoren vorgenommen. Besonders geeignet als Veresterungskatalysator ist p-Toluolsulfonsäure. Die Veresterungsreaktion ist nach etwa 0,5 bis 20 Stunden, oft 1 bis 10 Stunden beendet. Lösungsmittel für die Veresterungsreaktion, sofern sie überhaupt eingesetzt werden, sind alle diejenigen organischen Flüssigkeiten, die gegenüber den Anhydridgruppen inert sind und die sowohl die Ausgangsumsetzungsprodukte als auch die partiell veresterten Copolymerisate lösen oder zumindest quellen. Beispielhaft genannt seien Toluol, Xylol, Ethylbenzol, oder aliphatische Kohlenwasserstoffe, wie Hexan- oder Octangemische sowie Ketone, wie Aceton oder Methylethylketon.

Nach der partiellen Veresterung werden die Lösungsmittel - sofern sie verwendet werden - aus dem Reaktionsgemisch, beispielsweise durch Destillation, entfernt und die verbleibenden partiell veresterten Copolymerisate in Wasser unter Zusatz von Basen gelöst. Hierbei werden die noch in den Copolymerisaten enthaltenen Anydridgruppen hydrolysiert. Geeignete Basen sind beispielsweise Alkali- und Erdalkalihydroxide, beispielsweise Natrium-, Kalium- oder Kalziumhydroxide sowie Ammoniak, Amine oder Alkanolamine.

Der pH-Wert der so erhaltenen wässrigen partiell veresterten Copolymerisatlösungen beträgt 4 bis 10 und liegt vorzugsweise im Bereich 6 bis 9.

Die erfindungsgemäß als Pigmentdispergiermittel PD zu verwendeten partiell veresterten Copolymerisate können in Form der freien Säuren und in partiell oder vollständig mit Base neutralisierter Form vorliegen. Oft sind ≥ 1 %, ≥ 5 %, ≥ 10 %, ≥ 20 %, ≥ 30 %, ≥ 40 %, ≥ 50 %, ≥ 60 %, ≥ 70 %, ≥ 80 %, ≥ 90 % oder sogar 100 %, oder aber auch ≤ 90 %, ≤ 80 %, ≤ 70 %, ≤ 60 %, ≤ 50 %, ≤ 40 % oder ≤ 30 % der im Copolymerisat vorhandenen nicht veresterten Carboxylgruppen mit einer Base neutralisiert. Bevorzugt sind ≥ 50 % der im Copolymerisat vorhandenen nicht veresterten Carboxylgruppen mit einer Base neutralisiert.

Mit Vorteil enthält die wässrige Beschichtungsmasse insgesamt 0,1 bis 10 Gew.-%, oft 0,2 bis 5 Gew.-% und häufig 0,3 bis 3 Gew.-% Pigmentdispergiermittel PD, jeweils bezogen auf den Feststoffgehalt der wässrigen Beschichtungsmasse.

Die erfindungsgemäße wässrige Beschichtungsmasse kann neben wenigstens einem feinteiligen Pigment, wenigstens einem feinteiligen Füllstoff, wenigstens einem polymerem Bindemittel und wenigstens einem Pigmentdispergiermittel PD noch weitere übliche Hilfsstoffe, wie beispielsweise Filmbildehilfsmittel, Verdicker, Entschäumer, Netz- und Dispergierhilfsmittel, Neutralisationsmittel und/oder Konservierungsmittel enthalten. Der Gesamtgehalt an weiteren üblichen Hilfsstoffen beträgt in der Regel ≤ 10 Gew.-%, oder ≤ 5 Gew.-%, jeweils bezogen auf den Feststoffgehalt der wässrigen Beschichtungsmasse.

Filmbildehilfsmittel, auch Koaleszenzhilfsmittel genannt, werden eingesetzt, um auch polymere Bindemittel mit einer Glastemperatur von über 20 °C sicher bei Raumtemperatur verfilmen zu können. Diese Filmbildehilfsmittel verbessern die Filmbildung des polymeren Bindemittels bei der Ausbildung der Beschichtung und werden dann anschließend in Abhängigkeit von der Umgebungstemperatur, der Luftfeuchtigkeit und des Siedepunkts, sowie dem daraus resultierenden Dampfdruck aus der Beschichtung an die Umgebung abgegeben. Bei den Filmbildehilfsmittel, welche dem Fachmann bekannt sind, handelt es sich beispielsweise um Testbenzin, wassermischbare Glykolether, wie Butylglykol, Butyldiglykol, Dipropylenglykolmonomethyl- oder Dipropylenglykolbutylether sowie Glykolacetate, wie Butylglykolacetat, Butyldiglykolacetat, aber auch Ester von Carbonsäuren und Dicarbonsäuren, wie 2-Ethylhexylbenzoat, 2,2,4-Trimethylpentandiol-1,3-monoisobutyrat oder Tripropylenglykolmonoisobutyrat.

Um die Rheologie von wässrigen Beschichtungsmassen bei Herstellung, Handling, Lagerung und Applikation optimal einzustellen, werden häufig sogenannte Verdicker oder Rheologieaddtive als Formulierungsbestandteil eingesetzt. Dem Fachmann sind eine Vielzahl unterschiedlicher Verdicker bekannt, beispielsweise organische Verdicker, wie Xanthanverdicker, Guarverdicker (Polysaccharide), Carboxymethylcellulose, Hydroxyethylcellulose, Methylcellulose, Hydroxypropylmethylcellulose, Ethylhydroxyethylcellulose (Cellulosederivate), alkaliquellbare Dispersionen (Acrylatverdicker) oder hydrophob modifizierte, polyetherbasierte Polyurethane (Polyurethanverdicker) oder anorganische Verdicker, wie Bentonit, Hectorit, Smectit, Attapulgit (Bentone) sowie Titanate oder Zirkonate (Metallorganyle).

Um die Schaumbildung bei Herstellung, Handling, Lagerung und Applikation der wässrigen Beschichtungsmassen zu vermeiden, finden sogenannte Entschäumer Verwendung. Die Entschäumer sind dem Fachmann geläufig. Es handelt sich hierbei im wesentlichen um Mineralöl- und die Silikonölentschäumer. Entschäumer, vor allem die hochaktiven silikonhaltigen, sind generell sehr sorgfältig auszuwählen und zu dosieren, da sie zu Oberflächendefekten (Krater, Dellen etc.) der Beschichtung führen können. Wesentlich ist, dass durch Zusatz von feinstteiligen, hydrophoben Partikeln, beispielsweise hydrophobe Kieselsäure oder Wachspartikel, in die Entschäumerflüssigkeit, die Entschäumerwirkung noch gesteigert werden kann.

Um die Pigmente und Füllstoffe optimal in einer wässrigen Beschichtungsmasse nutzen zu können, muss ihre vollständige Dispergierung gewährleistet sein. Dabei unterstützen Dispergiermittel auf verschiedene Weise den Dispergiervorgang, beispielsweise durch Erleichterung der Benetzung der Pigmente und Füllstoffe im wässrigen Medium (Netzmittelwirkung), durch Aufbrechung der Pigment- und Füllstoffagglomerate und durch sterische bzw. elektrostatische Stabilisierung der beim Scherprozess entstehenden Primärpartikel (Dispergierwirkung).

Wesentlich ist, dass erfindungsgemäß neben dem wenigstens einen Pigmentdispergiermittel PD auch noch andere Dispergiermittel, wie beispielsweise Polyphosphate oder Polyphosphonate, Salze von Polycarbonsäuren, meist Polyacrylsäuren, sowie niedermolekulare Verbindungen, wie 2-Aminopropanol, Acetylendiole, aber auch einfache nichtionische Emulgatoren eingesetzt werden können.

Zur pH-Werteinstellung der wässrigen Beschichtungsmasse können dem Fachmann als Neutralisationsmittel geläufige Säuren oder Basen verwendet werden.

Um den Befall der wässrigen Beschichtungsmassen bei Herstellung, Handling, Lagerung und Applikation durch Mikroorganismen, wie beispielsweise Bakterien, (Schimmel)Pilzen oder Hefen zu vermeiden, werden häufig dem Fachmann geläufige Konservierungsmittel oder Biocide eingesetzt. Dabei finden insbesondere Wirkstoffkombinationen aus Methyl- und Chlorisothiazolinonen, Benzisothiazolinonen, Formaldehyd bzw. formaldehydabspaltende Agenzien Verwendung.

Neben vorgenannten Hilfsstoffen können den wässrigen Beschichtungsmassen bei Herstellung, Handling, Lagerung und Applikation auch noch weitere, dem Fachmann geläufige Hilfsstoffe, wie beispielsweise Mattierungsmittel, Wachse oder Verlaufshilfsmittel etc. zugesetzt werden.

Die erfindungsgemäße wässrige Beschichtungsmasse enthält häufig zu

| | |
|---|---|
| 40 bis 93,9 Gew.-% | wenigstens einen Füllstoff, |
| 2 bis 40 Gew.-% | wenigstens ein Pigment, |
| 4 bis 30 Gew.-% | wenigstens ein polymeres Bindemittel, |
| 0,1 bis 10 Gew.-% | wenigstens ein Pigmentdispergiermittel PD und |
| bis zu 10 Gew.-% | weiterer üblicher Hilfsstoffe, |

jeweils bezogen auf den Feststoffgehalt der wässrigen Beschichtungsmasse.

Oft enthält die wässrige Beschichtungsmasse zu

| | |
|---|---|
| 50 bis 91,9 Gew.-% | wenigstens einen Füllstoff, |
| 4 bis 30 Gew.-% | wenigstens ein Pigment, |
| 4 bis 25 Gew.-% | wenigstens ein polymeres Bindemittel, |
| 0,1 bis 10 Gew.-% | wenigstens ein Pigmentdispergiermittel PD und |
| bis zu 10 Gew.-% | weiterer üblicher Hilfsstoffe, |

jeweils bezogen auf den Feststoffgehalt der wässrigen Beschichtungsmasse.

Dabei ist es selbstverständlich, dass auch entsprechende Füllstoff-, Pigment-, Bindemittel- und/oder Pigmentdispergiermitteigemische eingesetzt werden können.

Der Feststoffgehalt der wässrigen Beschichtungsmasse lässt sich aus dem Quotienten, gebildet aus der Summe aller der die wässrige Beschichtungsmasse bildenden Einzelkomponenten abzüglich Wasser und der Summe aller der die wässrige Beschichtungsmasse bildenden Einzelkomponenten einschließlich Wasser, multipliziert mit dem Faktor 100 errechnen. Üblicherweise beträgt der Feststoffgehalt der wässrigen Beschichtungsmasse ≥ 40 Gew.-%, oft ≥ 50 Gew.-% und häufig ≥ 55 Gew.-%.

Aus Umweltgesichtspunkten ist es günstig, wenn die wässrige Beschichtungsmasse möglichst wenig bei Raumtemperatur flüchtige organische Bestandteile, insbesondere Filmbildehilfsmittel enthält. Vorteilhaft wird daher das polymere Bindemittel so gewählt, dass es bei Anwendungstemperatur, häufig 20 bis 25 °C (Raumtemperatur) gut verfilmt, so dass die wässrige Beschichtungsmasse ≤ 5 Gew.-%, ≤ 4 Gew.%, ≤ 3 Gew.-%, ≤ 2 Gew.-%, ≤ 1 Gew.-%, ≤ 0,5 Gew.-% Filmbildehilfsmittel, jeweils bezogen auf den Feststoffgehalt der wässrigen Beschichtungsmasse, enthält. Von Vorteil ist, wenn die wässrige Beschichtungsmasse keinerlei Filmbildehilfsmittel enthält.

Vorteilhaft erfolgt die Herstellung der erfindungsgemäßen Beschichtungsmasse dergestalt, dass zuerst das wenigstens eine feinteilige Pigment, der wenigstens eine feinteilige Füllstoff und das wenigstens eine Pigmentdispergiermittel PD sowie gegebenenfalls weitere übliche Hilfsstoffe in wässrigem Medium unter Anwendung hoher Scherkräfte (beispielsweise Rühren mit hoher Drehzahl) unter Ausbildung einer sogenannten Pigmentpaste homogen gemischt werden und daran anschließend das polymere Bindemittel in Form einer wässrigen Polymerisatdispersion oder eines Polymerisatpulvers sowie gegebenenfalls weitere übliche Hilfsmittel unter Anwendung geringerer Scherkräfte (beispielsweise Rühren mit geringerer Drehzahl) homogen mit der Pigmentpaste gemischt werden. Entsprechende Dispergiertechniken, geeignete Dispergierapparate und deren Handhabung sind dem Fachmann geläufig (siehe hierzu beispielsweise T.C. Patton, Paint Flow and Pigment Dispersion, 2nd Ed., Seiten 376 bis 529, J. Wiley, New York, 1979).

Als Pigmentpasten bzw. Pigmentsuspensionen zur Herstellung der erfindungsgemäßen wässrigen Beschichtungsmasse kommen grundsätzlich alle die in der DE-A 4300239 beschriebenen und offenbarten alkylvinyletherfreien, insbesondere die beispielhaft ausgeführten Pigmentsuspensionen in Betracht.

Die erfindungsgemäßen wässrigen Beschichtungsmassen können in vielfältigen Anwendungsgebieten, so zum Beispiel als Kunststoffdispersionsputz, Fliesenkleber oder Anstrichmittel eingesetzt werden.

Vorteilhaft handelt es sich bei der erfindungsgemäßen wässrigen Beschichtungsmasse um ein Anstrichmittel, insbesondere um eine Dispersionsfarbe für den Innenbereich. Die erfindungsgemäßen wässrigen Beschichtungsmassen zeichnen sich aus durch gute Lagerstabilität und niedrige Viskositätswerte, die daraus erhältlichen Beschichtungen besitzen vorteilhafte Eigenschaften, insbesondere eine verbesserte Nassscheuerfestigkeit.

Die Erfindung wird anhand der nachfolgenden, nicht einschränkenden Beispiele näher erläutert.

Beispiele

a) Herstellen der Pigmentpasten und der wässrigen Beschichtungsmassen

Aus den in den in der nachfolgenden Tabelle angegebenen Bestandteilen wurde bei Raumtemperatur in einem 1 l-Becherglas unter Rühren mit einem Scheibenrührer (Durchmesser 5,5 cm) bei 400 Umdrehungen pro Minute eine Pigmentpaste abgemischt. Dabei wurden die einzelnen Bestandteile in der angegebenen Reihenfolge der Abmischung zugegeben.

| Gew.-Teile [g] | Bestandteil |
| --- | --- |
| 300,0 | entionisiertes Wasser |
| 4,0 | Verdicker, Hydroxyethylcellulose, Natrosol® 250 HR der Fa. Hercules GmbH, Düsseldorf |
| 2,0 | 20 gew.-%ige wässrige Lösung von Natriumhydroxid |
| X | Pigmentdispergiermittel A, B, C oder D |
| 1,0 | Konservierungsmittel, Kombination von Isothiazolinonderivaten mit N- und O-Formalen, Parmetol® A 26 der Fa. Schülke & Mayr GmbH, Norderstedt |
| 2,0 | Entschäumer, Byk® 038 der Fa. Byk-Chemie GmbH, Wesel |
| 60,0 | Pigment, Titandioxid, mittlere Teilchengröße 0,3 $\mu$m, Kronos® 2300 der Fa. Kronos Titan GmbH, Leverkusen |
| 20,0 | Füllstoff, Aluminiumsilikat, mittlere Teilchengröße 0,03 $\mu$m, Aluminiumsilikat P® 820 der Fa. Degussa AG, Hanau |
| 50,0 | Füllstoff, gefälltes Kalziumcarbonat, mittlere Teilchengröße 0,3 $\mu$m, Socal® P2 der Fa. Solvay Soda GmbH, Rheinberg |
| 90,0 | Füllstoff, Talkum, mittlere Teilchengröße 5 $\mu$m (blättchenförmig), Westmin® Talc 30 E der Fa. Omya GmbH, Köln |
| 80,0 | Füllstoff, Kalziumcarbonat, mittlere Teilchengröße 2,5 $\mu$m, Omya-carb® 2 GU der Fa. Omya GmbH, Köln |
| 230,0 | Füllstoff, Kalziumcarbonat, mittlerer Teilchengröße 5 $\mu$m, Omya-carb® 5 GU der Fa. Omya GmbH, Köln |

Nach beendeter Zugabe wurden die Pigmentpasten 20 Minuten bei 1000 Umdrehungen pro Minute gerührt und danach die Drehzahl des Rührers wieder auf 500 Umdrehungen pro Minute reduziert.

Der entsprechenden Pigmentpaste wurden unter Rühren 2,0 g Entschäumer, Byk® 038, 83,5 g polymeres Bindemittel E oder F und so viel Wasser zugemischt, dass insgesamt 1000 g einer wässrigen Beschichtungsmasse erhalten wurden. Die erhaltenen Beschichtungsmassen wurden noch 5 Minuten bei 500 Umdrehungen pro Minute gerührt und dann der Rührer abgeschaltet. Vor der anwendungstechnischen Prüfung ließ man die wässrigen Beschichtungsmassen 24 Stunden bei Raumtemperatur ruhen. Anschließend wurden sie durch einen 125 $\mu$m-Filter unter Anlegen eines Vakuums filtriert, um Luftblasen und mögliche Pigmentagglomerate zu entfernen. Die gefilterten Beschichtungsmassen wurden anschließend für die anwendungstechnischen Untersuchungen eingesetzt.

b) Anwendungstechnische Untersuchungen

Vor Beginn der Untersuchungen wurden die wässrigen Beschichtungsmassen mit einem 60 mm breiten Rakel geeigneter Spaltweite auf eine Leneta-Folie aufgetragen, so dass eine Beschichtung mit 100 $\mu$m Trockenschichtdicke resultierte. Die beschichteten Leneta-Folien wurden zur Ausbildung der Beschichtungen 7 Tage im Klimaraum bei 23 °C und 50 % relativer Luftfeuchtigkeit gelagert. Anschließend wurden die beschichteten Leneta-Folien in einem Scheuergerät entsprechend der in ENISO 11998 beschriebenen Prüfmethode 40 bzw. 200 Doppelhüben mit einem Scheuervlies ausgesetzt und dabei der sogenannte Nassabrieb bestimmt. Dabei gilt, je geringer der Nassabrieb ausfällt, desto besser ist die Nassscheuerfestigkeit der entsprechenden Beschichtung. Es wurden die in folgender Tabelle aufgelisteten Versuche durchgeführt:

| Versuch | 1 | V1 | V2 | 2 | V3 |
|---|---|---|---|---|---|
| wässrige Beschichtungsmasse: | | | | | |
| Pigmentdispergiermittel X | A | B | C | A | D |
| Menge X in g | 5,0 | 4,7 | 9,0 | 6,7 | 12,0 |
| polymeres Bindemittel | E | E | E | F | F |
| Prüfung: | | | | | |
| Viskosität der wässrigen | | | | | |
| Beschichtungsmasse in mPas (ISO 3210, 23°C, 100 s$^{-1}$) | | | | | |
| nach 24 Stunden (Raumtemperatur) | 740 | 770 | 4380 | 760 | 560 |
| nach 14 Tagen (bei 50 °C) | 740 | 720 | 3970 | 780 | 610 |
| Nassabrieb der Beschichtung in $\mu$m nach | | | | | |
| 40 Doppelhüben | 18 | 48 | 25 | - | - |
| 200 Doppelhüben | 76 | 100 | 87 | 66 | 89 |

mit

A    eine 45 gew.-%ige wässrige Lösung eines Umsetzungsproduktes aus Maleinsäureanhydrid/Diisobuten/ethoxiliertem $C_{13/15}$-Oxoalkohol (mit durchschnittlich 7 Ethylenoxideinheiten) im Molverhältnis 1 : 1 : 1 (mit Natriumhydroxid vollständig neutralisiert)

B    eine 1 : 1-Mischung aus
a) einer 45 gew.%igen wässrigen Lösung eines Polyacrylsäure-Natriumsalzes (Pigmentverteiler® S der Fa. BASF AG, Ludwigshafen) und
b) einer 50 gew.-%igen wässrigen Lösung von Tetrakaliumpyrophosphat

C    eine 25 gew.-%ige wässrige Lösung eines Umsetzungsproduktes aus Maleinsäureanhydrid/$C_{20}$-$C_{24}$-Olefins (Densodrin® BA der Fa. BASF AG, Ludwigshafen)

D    eine 25 gew.-%ige wässrige Lösung eines Umsetzungsproduktes aus Maleinsäureanhydrid/Diisobuten (Pigmentverteiler® MD der Fa. BASF AG, Ludwigshafen)

E    eine 50 gew.-%ige wässrige Dispersion eines Copolymerisats auf Basis n-Butylacrylat/Styrol mit einer Tg (DSC) von ca. 1 °C (Acronal® S 559 der Fa. BASF AG, Ludwigshafen)

F    eine 50 gew.-%ige wässrige Dispersion eines Copolymerisats auf Basis 2-Ethylhexylacrylat/Styrol mit einer Tg (DSC) von ca. 8 °C (Acronal® DS 6255 der Fa. BASF AG, Ludwigshafen)

Wie aus den in der Tabelle aufgelisteten Untersuchungsergebnissen klar ersichtlich ist, weisen die erfindungsgemäßen Versuche 1 und 2 deutlich bessere Ergebnisse hinsichtlich der Nassscheuerfestigkeit auf als die entsprechenden Vergleichsversuche V1 und V2 bzw. V3. Auch zeigt die wässrige Beschichtungsmasse des Vergleichsversuch V2 eine deutlich höhere Viskosität im Vergleich zu den erfindungsgemäßen wässrigen Beschichtungsmassen.

**Patentansprüche**

1. Wässrige Beschichtungsmasse mit einer Pigmentvolumenkonzentration (PVK) $\geq$ 60 %, enthaltend wenigstens ein feinteiliges Pigment, wenigstens einen feinteiligen Füllstoff, wenigstens ein polymeres Bindemittel und wenigstens ein Pigmentdispergiermittel PD sowie gegebenenfalls weitere übliche Hilfsstoffe, **dadurch gekennzeichnet, dass** das wenigstens eine Pigmentdispergiermittel PD ein partiell verestertes Copolymerisat ist, das erhältlich ist durch Copolymerisation von

    a) wenigstens einem $C_4$- bis $C_{40}$-Olefin als Komponente A mit
    b) wenigstens einem ethylenisch ungesättigten Dicarbonsäureanhydrid mit 4 bis 8 C-Atomen als Komponente B

    im Molverhältnis A : B von 1 : 0,5 bis 2 zu einem Copolymerisat mit einem K-Wert von 6 bis 100 (bestimmt nach H. Fikentscher in Tetrahydrofuran bei 25 °C und einer Copolymerisatkonzentration von 1 Gew.-%) und anschließende partielle Veresterung des Copolymerisats mit einem Umsetzungsprodukt aus

    x) $C_1$- bis $C_{30}$-Alkoholen, $C_8$- bis $C_{22}$-Fettsäuren, $C_1$- bis $C_{12}$-Alkylphenolen, sekundären $C_2$- bis $C_{30}$-Aminen oder deren Mischungen als Komponente X und
    y) wenigstens einem $C_2$- bis $C_4$-Alkylenoxid als Komponente Y

    im Molverhältnis X : Y von 1 : 2 bis 200, und Hydrolyse der Anhydridgruppen zu Carboxylgruppen, wobei die partielle Veresterung des Copolymerisats so weit geführt wird, dass 1 bis 50 % der Carboxylgruppen des Copolymerisats verestert sind.

2. Wässrige Beschichtungsmasse nach Anspruch 1, **dadurch gekennzeichnet, dass** der Gehalt des wenigstens einen Pigmentdispergiermittels PD 0,1 bis 10 Gew.-%, bezogen auf den Feststoffgehalt der wässrigen Beschichtungsmasse, beträgt.

3. Wässrige Beschichtungsmasse nach einem der Ansprüche 1 oder 2, **dadurch gekennzeichnet, dass** sie zu

    | | |
    |---|---|
    | 40 bis 93,9 Gew.-% | wenigstens einen Füllstoff, |
    | 2 bis 40 Gew.-% | wenigstens ein Pigment, |
    | 4 bis 30 Gew.% | wenigstens ein polymeres Bindemittel, |
    | 0,1 bis 10 Gew.-% | wenigstens ein Pigmentdispergiermittel PD und |
    | bis zu 10 Gew.-% | weitere übliche Hilfsstoffe, |

    jeweils bezogen auf den Feststoffgehalt der wässrigen Beschichtungsmasse, enthält.

4. Wässrige Beschichtungsmasse nach einem der Ansprüche 1 bis 3, **dadurch gekennzeichnet, dass** der Gehalt an als Hilfsstoff optional eingesetztem organischen Filmbildehilfsmittel $\leq$ 5 Gew.-%, bezogen auf den Feststoffgehalt der wässrigen Beschichtungsmasse, beträgt.

5. Wässrige Beschichtungsmasse nach einem der Ansprüche 1 bis 4, **dadurch gekennzeichnet, dass** es sich bei der wässrigen Beschichtungsmasse um einen Kunststoffdispersionsputz, einen Fliesenkleber oder ein Anstrichmittel handelt.

6. Beschichtungsmasse nach Anspruch 5, **dadurch gekennzeichnet, dass** es sich bei der wässrigen Beschichtungsmasse um ein Anstrichmittel handelt.

7. Beschichtungsmasse nach Anspruch 6, **dadurch gekennzeichnet, dass** es sich bei dem Anstrichmittel um eine Dispersionsfarbe für den Innenbereich handelt.

8. Beschichtungsmasse nach einem der Ansprüche 1 bis 7, **dadurch gekennzeichnet, dass** die PVK $\geq$ 70 % beträgt.

9. Verfahren zur Herstellung einer wässrigen Beschichtungsmasse mit einer PVK $\geq$ 60 %, enthaltend wenigstens ein feinteiliges Pigment, wenigstens einen feinteiligen Füllstoff, wenigstens ein polymeres Bindemittel und wenigstens ein Pigmentdispergiermittel PD sowie gegebenenfalls weitere übliche Hilfsstoffe, **dadurch gekennzeichnet, dass** zuerst das wenigstens eine feinteilige Pigment, der wenigstens eine feinteilige Füllstoff und das wenigstens eine Pigmentdispergiermittel PD sowie gegebenenfalls weitere übliche Hilfsstoffe in wässrigem Medium homogen gemischt werden (Pigmentpaste) und daran anschließend das polymere Bindemittel in Form einer wässrigen Polymerisatdispersion oder eines Polymerisatpulvers sowie gegebenenfalls weitere übliche Hilfsstoffe homogen mit der Pigmentpaste gemischt werden.

10. Verwendung einer Pigmentpaste bestehend aus Wasser, wenigstens einem feinteiligen Pigment, wenigstens einem feinteiligen Füllstoff und wenigstens einem Pigmentdispergiermittel PD sowie gegebenenfalls weiteren üblichen Hilfsstoffen zur Herstellung einer wässrigen Beschichtungsmasse mit einer PVK $\geq$ 60 %, enthaltend wenigstens ein feinteiliges Pigment, wenigstens einen feinteiligen Füllstoff, wenigstens ein polymeres Bindemittel und wenigstens ein Pigmentdispergiermittel PD sowie gegebenenfalls weitere übliche Hilfsstoffe.

**Claims**

1. An aqueous coating composition having a pigment volume concentration (PVC) $\geq$ 60%, comprising at least one finely divided pigment, at least one finely divided filler, at least one polymeric binder and at least one pigment dispersant PD plus optionally further customary auxiliaries, wherein said at least one pigment dispersant PD is a partially esterified copolymer obtainable by copolymerizing

   a) at least one $C_4$ to $C_{40}$ olefin component A with
   b) at least one ethylenically unsaturated $C_4$ to $C_8$ dicarboxylic anhydride component B

   in an A:B molar ratio of 1:0.5 to 2 to a copolymer having a K value of from 6 to 100 (determined in accordance with H. Fikentscher in tetrahydrofuran at 25°C and a copolymer concentration of 1% by weight) and subsequently partly esterifying the copolymer with a reaction product of

   x) $C_1$ to $C_{30}$ alcohol, $C_8$ to $C_{22}$ fatty acid, $C_1$ to $C_{12}$ alkylphenol or secondary $C_2$ to $C_{30}$ amine components X or mixtures thereof and
   y) at least one $C_2$ to $C_4$ alkylene oxide component Y

   in an X:Y molar ratio of 1:2 to 200, and hydrolyzing the anhydride groups to carboxyl groups, the partial esterification of the copolymer being taken to a point where from 1 to 50% of its carboxyl groups are esterified.

2. The aqueous coating composition according to claim 1, wherein the amount of said at least one pigment dispersant PD is from 0.1 to 10% by weight, based on the solids content of the aqueous coating composition.

3. The aqueous coating composition according to one of claims 1 and 2, containing 40 to 93.9% by weight of at least one filler,

   | 2 to 40% by weight | of at least one pigment, |
   |---|---|
   | 4 to 30% by weight | of at least one polymeric binder, |
   | 0.1 to 10% by weight | of at least one pigment dispersant PD, and |
   | up to 10% by weight | of further customary auxiliaries, |

   based in each case on the solids content of the aqueous coating composition.

4. The aqueous coating composition according to one of claims 1 to 3, wherein the amount of organic film-forming assistant used optionally as auxiliary is $\leq$ 5% by weight, based on the solids content of the aqueous coating composition.

5. The aqueous coating composition according to one of claims 1 to 4, wherein the aqueous coating composition is a polymer dispersion render, a tile adhesive or a paint.

6. The coating composition according to claim 5, wherein the aqueous coating composition is a paint.

7. The coating composition according to claim 6, wherein the paint is an interior emulsion paint.

8. The coating composition according to one of claims 1 to 7, wherein the PVC is $\geq 70\%$.

9. A process for preparing an aqueous coating composition having a PVC $\geq 60\%$, comprising at least one finely divided pigment, at least one finely divided filler, at least one polymeric binder and at least one pigment dispersant PD plus optionally further customary auxiliaries, wherein first of all said at least one finely divided pigment, said at least one finely divided filler and said at least one pigment dispersant PD plus optionally further customary auxiliaries are mixed homogeneously in an aqueous medium (pigment paste) and subsequently the polymeric binder in the form of an aqueous polymer dispersion or polymer powder plus optionally further customary auxiliaries are mixed homogeneously with the pigment paste.

10. Use of a pigment paste composed of water, at least one finely divided pigment, at least one finely divided filler and at least one pigment dispersant PD plus optionally further customary auxiliaries to prepare an aqueous coating composition having a PVC $\geq 60\%$ comprising at least one finely divided pigment, at least one finely divided filler, at least one polymeric binder and at least one pigment dispersant PD plus optionally further customary auxiliaries.

## Revendications

1. Matière de revêtement aqueuse à concentration volumique en pigments (PVK) $\geq 60$ %, contenant au moins un pigment finement divisé, au moins une charge finement divisée, au moins un liant polymère et au moins un agent de dispersion de pigments PD, ainsi qu'éventuellement des adjuvants usuels supplémentaires, **caractérisée en ce que** le ou les agents de dispersion de pigments PD sont un copolymère partiellement estérifié, qui peut être obtenu par copolymérisation de

   a) au moins une oléfine en $C_4$ à $C_{40}$ en tant que composant A avec
   b) au moins un anhydride d'acide dicarboxylique éthyléniquement insaturé contenant 4 à 8 atomes C en tant que composant B

   en un rapport molaire A:B de 1:0,5 à 2 pour former un copolymère ayant une valeur K de 6 à 100 (déterminée selon H. Fikentscher dans du tétrahydrofurane à 25 °C et à une concentration de copolymère de 1 % en poids), puis estérification partielle du copolymère avec un produit de réaction de

   x) des alcools en $C_1$ à $C_{30}$, des acides gras en $C_8$ à $C_{22}$, des alkylphénols en $C_1$ à $C_{12}$, des amines secondaires en $C_2$ à $C_{30}$ ou leurs mélanges en tant que composant X, et
   y) au moins un oxyde d'alkylène en $C_2$ à $C_4$ en tant que composant Y

   en un rapport molaire X:Y de 1:2 à 200, et hydrolyse des groupes anhydride en groupes carboxyle, l'estérification partielle du copolymère étant réalisée jusqu'à ce que 1 à 50 % des groupes carboxyle du copolymère soient estérifiés.

2. Matière de revêtement aqueuse selon la revendication 1, **caractérisée en ce que** la teneur du ou des agents de dispersion de pigments PD est de 0,1 à 10 % en poids, par rapport à la teneur en solides de la matière de revêtement aqueuse.

3. Matière de revêtement aqueuse selon l'une quelconque des revendications 1 ou 2, **caractérisée en ce qu'**elle contient
   40 à 93,9 % en poids d'au moins une charge,
   2 à 40 % en poids d'au moins un pigment,
   4 à 30 % en poids d'au moins un liant polymère,
   0,1 à 10 % en poids d'au moins un agent de dispersion de pigments PD et
   jusqu'à 10 % en poids d'adjuvants usuels supplémentaires,
   à chaque fois par rapport à la teneur en solides de la matière de revêtement aqueuse.

4. Matière de revêtement aqueuse selon l'une quelconque des revendications 1 à 3, **caractérisée en ce que** la teneur en adjuvants filmogènes organiques éventuellement utilisés en tant qu'adjuvant est $\leq 5$ % en poids par rapport à la teneur en solides de la matière de revêtement aqueuse.

5. Matière de revêtement aqueuse selon l'une quelconque des revendications 1 à 4, **caractérisée en ce que** la matière de revêtement aqueuse est un enduit en dispersion plastique, une colle à carrelage ou une peinture.

**6.** Matière de revêtement selon la revendication 5, **caractérisée en ce que** la matière de revêtement aqueuse est une peinture.

**7.** Matière de revêtement selon la revendication 6, **caractérisée en ce que** la peinture est une peinture en émulsion pour l'intérieur.

**8.** Matière de revêtement selon l'une quelconque des revendications 1 à 7, **caractérisée en ce que** la PVK est $\geq$ 70 %.

**9.** Procédé de fabrication d'une matière de revêtement aqueuse ayant une PVK 60 %, contenant au moins un pigment finement divisé, au moins une charge finement divisée, au moins un liant polymère et au moins un agent de dispersion de pigments PD, ainsi qu'éventuellement des adjuvants usuels supplémentaires, **caractérisé en ce que** le ou les pigments finement divisés, la ou les charges finement divisées et le ou les agents de dispersion de pigments PD, ainsi qu'éventuellement des adjuvants usuels supplémentaires sont tout d'abord mélangés de manière homogène dans un milieu aqueux (pâte de pigment), puis le liant polymère sous la forme d'une dispersion aqueuse de polymère ou d'une poudre de polymère, ainsi qu'éventuellement des adjuvants usuels supplémentaires sont mélangés de manière homogène avec la pâte de pigment.

**10.** Utilisation d'une pâte de pigment constituée d'eau, d'au moins un pigment finement divisé, d'au moins une charge finement divisée et d'au moins un agent de dispersion de pigments PD, ainsi qu'éventuellement d'adjuvants usuels supplémentaires, pour la fabrication d'une matière de revêtement aqueuse ayant une PVK 60 %, contenant au moins un pigment finement divisé, au moins une charge finement divisée, au moins un liant polymère et au moins un agent de dispersion de pigments PD, ainsi qu'éventuellement des adjuvants usuels supplémentaires.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 542033 A
- DE 4300239 A
- EP 498195 A
- DE 4003422 A
- EP 367049 A

**In der Beschreibung aufgeführte Nicht-Patentliteratur**

- Encyclopedia of Polymer Science and Engineering. John Wiley & Sons, Inc, 1987, vol. 8, 659-677
- **D.C. BLACKLEY.** Emulsion Polymerisation. Applied Science Publishers, 1975
- **D.C. BLACKLEY.** Polymer Latices. Chapman & Hall, 1997, vol. 1, 33-415
- **H. WARSON.** The Applications of Synthetic Resin Emulsions. Ernest Benn, Ltd, 1972, 49-244
- **D. DIEDERICH.** Chemie in unserer Zeit. Verlag Chemie, 1990, vol. 24, 135-142
- **J. PIIRMA.** Emulsion Polymerisation. Academic Press, 1982, 1-287
- **F. HÖLSCHER.** Dispersionen synthetischer Hochpolymerer. Springer-Verlag, 1969, 1-160
- **T.G. FOX.** Nach Fox. Bull. Am. Phys. Soc, 1956, vol. 1, 123
- Ull-mann's Encyclopädie der technischen Chemie. Verlag Chemie, 1980, vol. 19, 18
- Ullmann's Encyclopedia of Industrial Chemistry. Verlag Chemie, 1992, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- **T.C. PATTON.** Paint Flow and Pigment Dispersion. J. Wiley, 1979, 376-529